# EUROPÄISCHE PATENTSCHRIFT

(11) **EP 4 164 927 B1**
(45) Veröffentlichungstag und Bekanntmachung des Hinweises auf die Patenterteilung: **23.04.2025**
(21) Anmeldenummer: 21725464.8
(22) Anmeldetag: 07.05.2021
(51) Int. Cl.: B60R 19/48, F16B 5/06

(54) **BAUTEILANORDNUNG MIT PLATZSPARENDER RASTVERBINDUNG**
COMPONENT ASSEMBLY COMPRISING SPACE-SAVING DETENT CONNECTION
ENSEMBLE COMPOSANT COMPRENANT UNE LIAISON PAR ENCLIQUETAGE PERMETTANT UNE ÉCONOMIE D'ESPACE

(30) Priorität: 10.06.2020 DE 102020115393
(43) Veröffentlichungstag der Anmeldung: 19.04.2023
(73) Patentinhaber: Bayerische Motoren Werke Aktiengesellschaft, 80809 München (DE)
(72) Erfinder: SCHADT, Steffen, 85435 Erding (DE); ANDREE, Helge, 84032 Landshut (DE)
(86) Internationale Anmeldenummer: PCT/EP2021/062148
(87) Internationale Veröffentlichungsnummer: WO 2021/249702

(56) Entgegenhaltungen:
- FR-A1- 2 896 729
- FR-A1- 2 912 099

## Beschreibung

Die Erfindung betrifft eine Bauteilanordnung gemäß dem Oberbegriff des Patentanspruchs 1 sowie ein Fahrzeug mit einer entsprechenden Bauteilanordnung.

Zum leichten und kostengünstigen aber dennoch zuverlässigen Verbinden von Bauteilen sind Rastverbindungen weit verbreitet. Auch im Fahrzeugbau kommt diese Art der Bauteilverbindung vielfach zum Einsatz. Bauteile lassen sich entweder mit separaten Rastelementen, sogenannten Clipsen, miteinander verbinden oder über Rasthaken, die einstückig mit dem jeweiligen Bauteil ausgebildet sein können und in Eingriff mit einem zweiten Bauteil gebracht werden.

Für jede Rastverbindung ist üblicherweise ein ausreichender Bauraum erforderlich, um ein sicheres Verrasten sicherstellen zu können. Sollen jedoch mehrere einzelne Bauteile zu einer gemeinsamen Bauteilanordnung verbunden werden, ist meist eine Vielzahl von Rastverbindungen erforderlich, deren Anordnung insbesondere in beengten Bauraumverhältnissen große Schwierigkeiten bereiten kann.

Eine gattungsgemäße Bauteilanordnung ist bekannt aus FR 2 896 729 A1.

Eine Aufgabe der Erfindung ist es daher, eine Bauteilanordnung mit mehreren Rastverbindungen in vorteilhafter Weise weiterzuentwickeln, insbesondere eine bauraumsparende Anordnung bereitzustellen.

Diese Aufgabe wird gelöst mit einer Bauteilanordnung gemäß dem Gegenstand des Patentanspruchs 1 sowie einem Fahrzeug mit den Merkmalen des Patentanspruchs 6. Vorteilhafte Ausgestaltungen ergeben sich aus den jeweils abhängigen Patentansprüchen.

Demnach wird eine Bauteilanordnung bereitgestellt mit einem Trägerelement und einem ersten Bauteilelement, welches mittels einer ersten Rastverbindung mit dem Trägerelement verbunden ist, und einem zweiten Bauteilelement, welches mittels einer zweiten Rastverbindung mit dem ersten Bauteilelement verbunden ist, wobei die erste Rastverbindung einen erste Rasthaken und die zweite Rastverbindung einen zweiten Rasthaken umfasst. Des Weiteren umgreift der zweite Rasthaken den ersten Rasthaken formschlüssig zum Bereitstellen der zweiten Rastverbindung.

Demnach weist die Bauteilanordnung also mindestens drei separate Elemente auf, die über die beiden Rastverbindungen miteinander verbunden werden: das Trägerelement, das erste Bauteilelement und das zweite Bauteilelement.

Das erste Bauteilelement wird mittels der ersten Rastverbindung formschlüssig mit dem Trägerelement verbunden, indem der erste Rasthaken formschlüssig mit dem Trägerelement in Eingriff steht. Im Folgenden wird jeweils von einem ersten Rasthaken gesprochen. Es versteht sich jedoch, dass die erste Rastverbindung nicht nur einen ersten Rasthaken sondern ebenso mehrere erste Rasthaken umfassen kann, die in gleicher Weise ausgebildet sind und mit dem Trägerelement in Eingriff stehen, um das erste Bauteilelement am Trägerelement zu verrasten.

Zum Beispiel kann der erste Rasthaken zum Bereitstellen der ersten Rastverbindung formschlüssig in Eingriff mit dem Trägerelement stehen, indem das Trägerelement eine Hinterschneidung aufweist, an dem der erste Rasthaken zur formschlüssigen Verbindung eingehakt werden kann beziehungsweise Eingriff findet. Die Hinterschneidung kann beispielsweise durch eine Ausnehmung oder einen Fortsatz des Trägerelements gebildet werden.

Das zweite Bauteilelement ist dagegen (zumindest im Bereich der Rastverbindungen) nicht unmittelbar an dem Trägerelement befestigt, sondern mit Hilfe des zweiten Rasthakens der zweiten Rastverbindung formschlüssig mit dem ersten Bauteilelement verbunden, genauer: mit dem ersten Rasthaken. Der zweite Rasthaken stellt also eine formschlüssige Verbindung mit dem ersten Rasthaken her, indem er diesen formschlüssig umgreift.

Im Folgenden wird jeweils von einem zweiten Rasthaken gesprochen. Es versteht sich jedoch, dass die zweite Rastverbindung nicht nur einen zweiten Rasthaken sondern ebenso mehrere zweite Rasthaken umfassen kann, die in gleicher Weise ausgebildet sind und mit dem ersten Bauteilelement in Eingriff stehen, um das zweite Bauteilelement an dem ersten Bauteilelement zu verrasten.

Mit der beschriebenen Bauteilanordnung ist es möglich, den für den jeweiligen Rasthaken erforderlichen Bauraum, einschließlich eines Montageraumes, der aufgrund einer elastischen Verformung des jeweiligen Rasthakens bei der Montage zusätzlich erforderlich ist, für beide Rasthaken gemeinsam zu nutzen. Gegebenenfalls ist dieser etwas größer zu dimensionieren als lediglich für einen der beiden Rasthaken, jedoch kann dieser in jedem Fall deutlich kleiner dimensioniert werden, als bei einer Anordnung der beiden Rasthaken an verschiedenen Stellen in Summe erforderlich wäre. Die beschriebene Bauteilanordnung ist somit besonders bauraumsparend und kann daher auch in Bereichen mit sehr beschränktem Bauraum Anwendung finden.

Die Bauteilanordnung in dem Fahrzeug ist zum Befestigen eines Sensors am Fahrzeug vorgesehen.

Das erste Bauteilelement ist ein Halterahmen für den Sensor, insbesondere für einen Sensor zur Abstandsmessung, wie einem Adaptive Cruise Control Sensor (kurz: ACC Sensor). Hierzu zählen insbesondere Radar- und/oder Ultraschall- und/oder Lidarsensoren. Der Sensor wird im verbauten Zustand von dem Halterahmen gehalten.

Zum Beispiel kann ein hakenförmiger Fortsatz des zweiten Rasthakens einen Kopfbereich des ersten Rasthakens formschlüssig umgreifen. Dies bedeutet, dass der Kopfbereich des ersten Rasthakens eine Hinterschneidung bildet, an der der hakenförmige Fortsatz des zweiten Rasthakens einhaken beziehungsweise eingreifen kann. Der zweite Rasthaken hält sich also an dem ersten Rasthaken fest.

Gemäß einer Ausführungsform kann der erste Rasthaken eine von dem Trägerelement abgewandte Außenseite aufweisen, welche einer Innenseite des zweiten Rasthakens zugewandt ist. Dies bedeutet, dass der zweite Rasthaken und der erste Rasthaken sandwichartig zueinander angeordnet sind. Beispielsweise können die beiden Rasthaken sogar sandwichartig aufeinander liegen. Beispielsweise kann die Innenseite des zweiten Rasthakens im verbauten Zustand zumindest abschnittsweise, also teilweise oder vollständig, auf der Außenseite des ersten Rasthakens aufliegen.

Zum Beispiel kann der erste Rasthaken zuerst an dem Trägerelement montiert werden, da hierzu eine elastische Verformung des ersten Rasthakens erforderlich ist. Der erste Rasthaken muss bei der Montage dem Trägerelement ausweichen, um in der finalen Einbauposition in den Eingriff mit dem Trägerelement einzurasten beziehungsweise einzuschnappen. Dies würde gegebenenfalls durch das auf der Außenseite des ersten Rasthakens angeordneten zweiten Rasthaken behindert, falls das erste und das zweite Bauteil bereits vorab miteinander verrastet wären.

Ist jedoch der erste Rasthaken montiert, so kann der zweite Rasthaken anschließend problemlos auf den ersten Rasthaken aufgesteckt werden und eine kompakte und platzsparende Bauteilanordnung geschaffen werden.

Selbstverständlich können weitere Rasthaken vorgesehen werden, die in gleicher Weise auf den zweiten beziehungsweise auf den jeweils darunter angeordneten Rasthaken aufgesteckt werden, wie dies für den zweiten Rasthaken und den ersten Rasthaken beschrieben ist. Die Rasthaken können in beliebiger Anzahl übereinander angeordnet werden, wobei stets der jeweils untere Rasthaken (analog zum beschriebenen ersten Rasthaken) zuerst montiert und anschließend der darüber angeordnete Rasthaken (analog zum beschriebenen zweiten Rasthaken) auf den unteren Rasthaken aufgesteckt wird. Auf diese Weise kann eine sandwichartige Struktur aus beliebig vielen Rasthaken erzeugt werden. Jeder der Rasthaken kann hierzu gemäß der Beschreibung des ersten beziehungsweise zweiten Rasthakens ausgebildet sein. Die gegebene Beschreibung ist entsprechend analog anwendbar.

Grundsätzlich kann die beschrieben Bauteilanordnung in allen Bereichen eingesetzt werden, in denen Rastverbindungen möglich sind. Vorzugsweise ist ein Einsatz in Fahrzeugen, aber auch in Werkzeugen, Maschinen, Möbeln oder in Gebäudeinstallationen möglich.

Als Fahrzeuge im Rahmen dieser Beschreibung kommen grundsätzlich alle Land-, Wasser- und Luftfahrzeuge in Betracht, die eine entsprechende Bauteilanordnung aufweisen. Bei Landfahrzeugen ist ein Einsatz sowohl bei motorgetriebenen Kraftfahrzeugen als auch bei nicht-angetriebenen Fahrzeugen, wie beispielsweise Fahrrädern, realisierbar. Neben Personenkraftwagen und Lastkraftwagen ist ein Einsatz auch bei anderen motorgetriebenen Fahrzeugen, wie beispielsweise Rollstühlen, Schneemobilen, Dreirädern oder Quads sowie vorzugsweise bei sogenannten Neigefahrzeugen möglich. Unter einem Neigefahrzeug werden unter anderem Motorräder oder motorradähnliche Kraftfahrzeuge, wie Motorroller, insbesondere neigefähige zwei-, drei- oder vierrädrige Motorroller, Scooter oder Dergleichen verstanden.

Gemäß einer bevorzugten Ausführungsform kann das zweite Bauteilelement ein Verkleidungsteil zum zumindest teilweisen Verkleiden des ersten Bauteilelements sein. So kann beispielsweise der Halterahmen und der damit verbunden Sensor ganz oder teilweise, vorzugsweise in Randbereichen des Sensors, von dem Verkleidungsteil bedeckt werden. Zum Beispiel kann der Sensor zwischen dem Halterahmen und dem Verkleidungsteil auf diese Weise gehalten werden.

Des Weiteren wird ein Fahrzeug mit einer Bauteilanordnung bereitgestellt, wobei die Bauteilanordnung gemäß der Beschreibung ausgebildet ist.

Des Weiteren kann das Trägerelement mit einer Fahrzeugstruktur des Fahrzeugs, insbesondere mit einer Frontmaske und/oder einer Frontscheinwerferanordnung, verbunden sein. Das Trägerelement kann als separates Bauteil ausgeführt sein und mit der Fahrzeugstruktur verbunden sein. Ebenso kann das Trägerelement aber auch einstückig beziehungsweise einteilig mit der Fahrzeugstruktur oder einer Komponente der Fahrzeugstruktur verbunden beziehungsweise ausgebildet sein.

Vorzugsweise ist die Bauteilanordnung derart ausgestaltet, dass der Sensor in eine Fahrzeuglängsrichtung des Fahrzeugs weist.

Die Erfindung wird nachfolgend anhand eines Ausführungsbeispiels unter Bezugnahme auf die Zeichnungen näher erläutert. Es zeigen:
- Fig. 1:: eine Schnittansicht einer Bauteilanordnung gemäß der Beschreibung,
- Fig. 2:: eine Detailansicht zu Fig. 1,
- Fig. 3:: eine perspektivische Ansicht der Bauteilanordnung gemäß Fig. 1, und
- Fig. 4:: eine perspektivische Ansicht einer Fahrzeugfront mit der Bauteilanordnung gemäß den Fig. 1 bis 3.

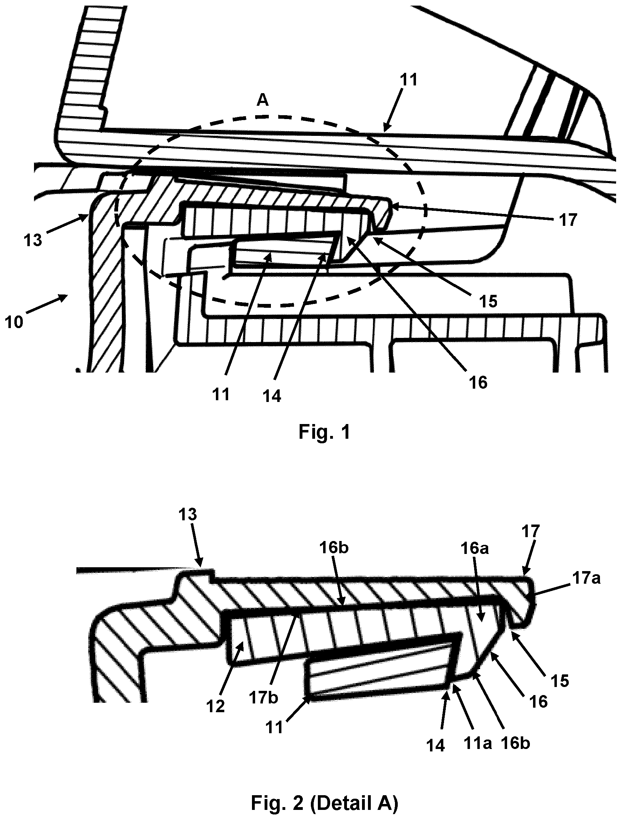

Fig. 1 zeigt eine Schnittansicht einer Bauteilanordnung 10 mit platzsparender Rastverbindung. Die Bauteilanordnung 10 umfasst ein Trägerelement 11 und ein erstes Bauteilelement 12, welches mittels einer ersten Rastverbindung 14 mit dem Trägerelement 11 verbunden ist. Anders beschrieben, stellt also die erste Rastverbindung 14 eine verrastbare Verbindung zwischen dem Trägerelement 11 und dem ersten Bauteilelement 12 her, um das erste Bauteilelement 12 an dem Trägerelement 11 zu befestigen.

Außerdem umfasst die Bauteilanordnung 10 ein zweites Bauteilelement 13, welches mittels einer zweiten Rastverbindung 15 mit dem ersten Bauteilelement 12 verbunden ist. Entsprechend stellt also die zweite Rastverbindung 15 eine verrastbare Verbindung zwischen dem ersten Bauteilelement 12 und dem zweiten Bauteilelement 13 her, um das zweite Bauteilelement 13 an dem ersten Bauteilelement 12 zu befestigen.

Die erste Rastverbindung 15 umfasst einen ersten Rasthaken 16. Dieser ist an dem ersten Bauteilelement 12 ausgebildet, insbesondere einstückig an diesem ausgebildet. Die zweite Rastverbindung 14 umfasst einen zweiten Rasthaken 17. Dieser ist an dem zweiten Bauteilelement 13 ausgebildet, insbesondere einstückig an diesem ausgebildet.

Im verbauten Zustand umgreift der zweite Rasthaken 17 den ersten Rasthaken 16 zum Bereitstellen der zweiten Rastverbindung 14 (zwischen diesen beiden Bauteilelementen 12,13) formschlüssig.

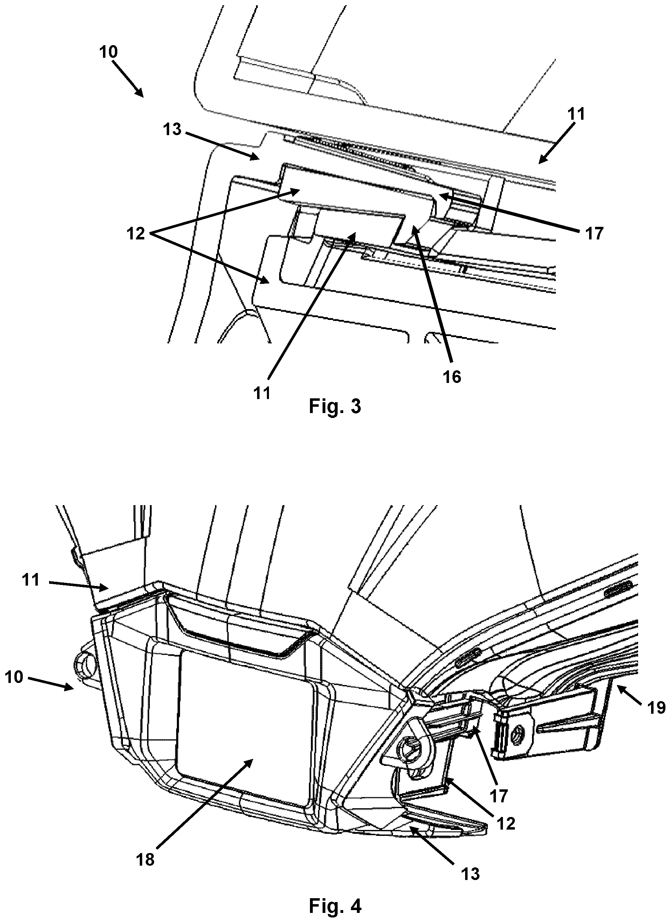

Wie insbesondere in der in Fig. 2 dargestellten Detailansicht A zur Fig. 1 sowie in der perspektivischen Ansicht der Bauteilanordnung 10 in Fig. 3 erkennbar, umgreift hierzu ein hakenförmiger Fortsatz 17a des zweiten Rasthakens 17 einen Kopfbereich 16a des ersten Rasthakens 16 formschlüssig.

Zudem steht der erste Rasthaken 16 zum Bereitstellen der ersten Rastverbindung 14 formschlüssig in Eingriff mit dem Trägerelement 11. Das Trägerelement 11 kann hierzu beispielsweise eine Hinterschneidung 11a aufweisen, in die der erste Rasthaken 16 mit einem hakenförmigen Fortsatz 16b eingreifen kann. Die Hinterschneidung 11a wird in der dargestellten Ausführungsform durch eine Ausnehmung bereitgestellt, kann aber ebenso auch durch einen in geeigneter Weise an dem Trägerelement 11 ausgebildeten Fortsatz bereitgestellt werden.

Wie aus den Figuren ersichtlich, ist es mit der beschriebenen Bauteilanordnung 10 möglich, den für den jeweiligen Rasthaken 16,17 erforderlichen Bauraum, einschließlich eines Montageraumes, der aufgrund einer elastischen Verformung des jeweiligen Rasthakens 16,17 bei der Montage zusätzlich erforderlich ist, für beide Rasthaken 16,17 gemeinsam zu nutzen.

In der dargestellten Ausführungsform weist der erste Rasthaken 16 eine (zumindest im Bereich der ersten Rastverbindung 14) von dem Trägerelement 11 abgewandte Außenseite 16b auf, welche einer Innenseite 17b des zweiten Rasthakens 17 zugewandt ist. Entsprechend sind der zweite Rasthaken 17 und der erste Rasthaken 16 sandwichartig zueinander angeordnet beziehungsweise liegen sandwichartig aufeinander.

Zur Montage kann der erste Rasthaken 16 zuerst an dem Trägerelement 11 montiert werden, da hierzu eine elastische Verformung des ersten Rasthakens 16 erforderlich ist. Der erste Rasthaken 16 muss bei der Montage dem Trägerelement 11 ausweichen, um in der finalen Einbauposition in den Eingriff mit dem Trägerelement 11 einzurasten beziehungsweise einzuschnappen. Dies würde andernfalls durch den auf der Außenseite 16b des ersten Rasthakens 16 angeordneten zweiten Rasthaken 17 behindert, falls das erste 12 und das zweite Bauteilelement 13 bereits vorab miteinander verrastet wären.

Ist jedoch der erste Rasthaken 16 montiert, so kann der zweite Rasthaken 17 anschließend problemlos auf den ersten Rasthaken 16 aufgesteckt und die kompakte und platzsparende Bauteilanordnung 10 geschaffen werden.

Fig. 4 zeigt eine perspektivische, teilweise dargestellte Ansicht einer Fahrzeugfront eines beispielhaft als Motorrad oder als motorradähnliches Fahrzeug ausgebildeten Fahrzeugs (nicht weiter dargestellt).

Dieses umfasst eine beispielhafte Ausführungsform der Bauteilanordnung 10 gemäß den Fig. 1 bis 3. Hierbei kann das erste Bauteilelement 12 ein Halterahmen für einen Sensor, insbesondere für einen in Fahrzeuglängsrichtung und/oder in Fahrtrichtung weisenden ACC Sensor, sein. Außerdem kann das zweite Bauteilelement 13 ein Verkleidungsteil zum Verkleiden des ersten Bauteilelements 12 sein. In einem an dem Fahrzeug verbauten Zustand kann das Trägerelement 11 mit einer Fahrzeugstruktur 19, insbesondere mit einer Frontmaske und/oder einer Frontscheinwerferanordnung, des Fahrzeugs verbunden sein. Die Verbindung des Trägerelements mit der Fahrzeugstruktur oder mit einer Komponente der Fahrzeugstruktur kann mehrteilig oder einstückig beziehungsweise ausgeführt sein.

Dank der Bauteilanordnung 10 kann der Sensor 18 leicht an dem Trägerelement 11 befestigt und zumindest teilweise verkleidet werden.

## Patentansprüche

1. Bauteilanordnung (10) mit einem Trägerelement (11) und einem ersten Bauteilelement (12), welches mittels einer ersten Rastverbindung (14) mit dem Trägerelement (11) verbunden ist, und einem zweiten Bauteilelement (13), welches mittels einer zweiten Rastverbindung (15) mit dem ersten Bauteilelement (12) verbunden ist, wobei die erste Rastverbindung (14) einen ersten Rasthaken (16) und die zweite Rastverbindung (15) einen zweiten Rasthaken (17) umfasst, wobei der zweite Rasthaken (17) den ersten Rasthaken (16) zum Bereitstellen der zweiten Rastverbindung (15) formschlüssig umgreift **dadurch gekennzeichnet, dass** das erste Bauteilelement (12) ein Halterahmen für einen Sensor (18) ist.

2. Bauteilanordnung (10) nach Anspruch 1, **dadurch gekennzeichnet, dass** ein hakenförmiger Fortsatz (17a) des zweiten Rasthakens (17) einen Kopfbereich (16a) des ersten Rasthakens (16) formschlüssig umgreift.

3. Bauteilanordnung (10) nach Anspruch 1 oder 2, **dadurch gekennzeichnet, dass** der erste Rasthaken (16) zum Bereitstellen der ersten Rastverbindung (14) formschlüssig in Eingriff mit dem Trägerelement (11) steht.

4. Bauteilanordnung (10) nach mindestens einem der Ansprüche 1 bis 3, **dadurch gekennzeichnet, dass** der erste Rasthaken (16) eine von dem Trägerelement (11) abgewandte Außenseite (16b) aufweist, welche einer Innenseite (17b) des zweiten Rasthakens (17) zugewandt ist.

5. Bauteilanordnung (10) nach mindestens einem der Ansprüche 1 bis 4, **dadurch gekennzeichnet, dass** das zweite Bauteilelement (13) ein Verkleidungsteil zum zumindest teilweisen Verkleiden des ersten Bauteilelements (12) ist.

6. Fahrzeug mit einer Bauteilanordnung (10), **dadurch gekennzeichnet, dass** die Bauteilanordnung (10) nach einem der Ansprüche 1 bis 5 ausgebildet ist.

7. Fahrzeug nach Anspruch 6, **dadurch gekennzeichnet, dass** das Trägerelement (11) mit einer Fahrzeugstruktur (19), insbesondere mit einer Frontmaske und/oder einer Frontscheinwerferanordnung, verbunden ist.

## Claims

1. Component arrangement (10) having a carrier element (11) and a first component element (12), which is connected to the carrier element (11) by means of a first latching connection (14), and a second component element (13), which is connected to the first component element (12) by means of a second latching connection (15), wherein the first latching connection (14) comprises a first latching hook (16) and the second latching connection (15) comprises a second latching hook (17), wherein the second latching hook (17) engages form-fittingly around the first latching hook (16) to provide the second latching connection (15), **characterized in that** the first component element (12) is a holding frame for a sensor (18).

2. Component arrangement (10) according to Claim 1, **characterized in that** a hook-like extension (17a) of the second latching hook (17) engages form-fittingly around a head region (16a) of the first latching hook (16).

3. Component arrangement (10) according to Claim 1 or 2, **characterized in that** the first latching hook (16) is form-fittingly engaged with the carrier element (11) to provide the first latching connection (14).

4. Component arrangement (10) according to at least one of Claims 1 to 3, **characterized in that** the first latching hook (16) has an outer side (16b) that faces away from the carrier element (11) and faces an inner side (17b) of the second latching hook (17).

5. Component arrangement (10) according to at least one of Claims 1 to 4, **characterized in that** the second component element (13) is a trim part for at least partially encasing the first component element (12).

6. Vehicle having a component arrangement (10), **characterized in that** the component arrangement (10) is configured according to one of Claims 1 to 5.

7. Vehicle according to Claim 6, **characterized in that** the carrier element (11) is connected to a vehicle structure (19), in particular to a front fairing and/or a front headlamp arrangement.

## Revendications

1. Agencement de composant (10) avec un élément de support (11) et un premier élément de composant (12) qui est relié à l'élément de support (11) au moyen d'une première liaison par encliquetage (14), et un deuxième élément de composant (13) qui est relié au premier élément de composant (12) au moyen d'une deuxième liaison par encliquetage (15), la première liaison par encliquetage (14) comprenant un premier crochet d'encliquetage (16) et la deuxième liaison par encliquetage (15) comprenant un deuxième crochet d'encliquetage (17), le deuxième crochet d'encliquetage (17) entourant par complémentarité de forme le premier crochet d'encliquetage (16) pour fournir la deuxième liaison par encliquetage (15), **caractérisé en ce que** le premier élément de composant (12) est un cadre de maintien pour un capteur (18).

2. Agencement de composant (10) selon la revendication 1, **caractérisé en ce qu'**un prolongement (17a) en forme de crochet du deuxième crochet d'encliquetage (17) entoure par complémentarité de forme une zone de tête (16a) du premier crochet d'encliquetage (16).

3. Agencement de composant (10) selon la revendication 1 ou 2, **caractérisé en ce que** le premier crochet d'encliquetage (16) est en prise par complémentarité de forme avec l'élément de support (11) pour fournir la première liaison par encliquetage (14).

4. Agencement de composant (10) selon au moins l'une quelconque des revendications 1 à 3, **caractérisé en ce que** le premier crochet d'encliquetage (16) présente un côté extérieur (16b) détourné de l'élément de support (11), qui est tourné vers un côté intérieur (17b) du deuxième crochet d'encliquetage (17).

5. Agencement de composant (10) selon au moins l'une quelconque des revendications 1 à 4, **caractérisé en ce que** le deuxième élément de composant (13) est une pièce d'habillage pour habiller au moins partiellement le premier élément de composant (12).

6. Véhicule avec un agencement de composant (10), **caractérisé en ce que** l'agencement de composant (10) est réalisé selon l'une quelconque des revendications 1 à 5.

7. Véhicule selon la revendication 6, **caractérisé en ce que** l'élément de support (11) est relié à une structure de véhicule (19), notamment à un masque avant et/ou à un agencement de phare avant.
